# EUROPEAN PATENT APPLICATION

(11) **EP 3 477 163 A1**
(43) Date of publication of application: **01.05.2019**
(21) Application number: 17815122.1
(22) Date of filing: 31.05.2017
(51) Int. Cl.: F16J 15/3212, F16J 15/3204

(54) **DUST SEAL**

(30) Priority: 22.06.2016 JP 2016123413
(71) Applicant: NOK Corporation, Tokyo 105-8585 (JP)
(72) Inventor: TOKUNAGA, Wataru, Kitaibaraki-shi Ibaraki 319-1535 (JP)
(74) Representative: TBK
(86) International application number: PCT/JP2017/020266
(87) International publication number: WO 2017/221653

(57) **Abstract**

A dust seal which causes a spring to function with stability to improve sealing performance. A seal main body 120 has an outer annular portion 121 which is fixed to an inner peripheral surface of a reinforcing ring 110, and an inner annular portion 123 which has a lip portion 123a which is slidable on an outer peripheral surface of a shaft 200. An annular spring 130 is installed on a sealed space side (O) of the seal main body 120, the spring 130 having an outer pressing portion 131 which presses an inner peripheral surface of the outer annular portion 121 radially outwardly, and an inner pressing portion 132 which presses an outer peripheral surface of the inner annular portion 123 radially inwardly.

## Description

### [Technical Field]

The present invention relates to a dust seal which seals the annular gap between a shaft and a housing so as to prevent entry of foreign substances.

### [Background Art]

A dust seal is installed in various apparatus, such as a hydraulic cylinder, to prevent entry of foreign substances from outside into inside of an apparatus (see PTL 1 and 2). For material of the dust seal, an elastic material, such as resin material including rubber, urethane and PTFE is used. When the dust seal is used for an apparatus where a shaft and a housing perform reciprocating motions, a material having high rigidity is often used for the dust seal in order to scrape off dust having adhered to a surface of the shaft. However, a lip portion of a dust seal formed of a material having high rigidity may deteriorate (plastically deform) by a creep phenomenon and its sealing performance may decrease. A known technique to address this issue is installing a spring in the dust seal, so that the outer peripheral surface of the lip portion is kept pressed radially inwardly, even if the lip portion deteriorates.

This spring generally includes an annular member having an approximately U-shaped or V-shaped cross-section. A known structure having the spring may allow dust to easily enter and accumulate inside the spring. This may lead to a decrease in elasticity of the spring. The spring may be made of metal and salt or metal particles contained in the dust may cause rust and electric corrosion in the spring. Thus, the spring may insufficiently function and the sealing performance may decrease as a result.

### [Citation List]

### [Patent Literature]

[PTL 1]
   Japanese Patent Application Publication NO. 2009-174555
[PTL 2]
   Japanese Patent Application Publication NO. 2014-163459

### [Summary of Invention]

### [Technical Problem]

It is an object of the present invention to provide a dust seal which causes a spring to function with stability to improve sealing performance.

### [Solution to Problem]

In order to achieve the above object, the present invention uses the following means.

A dust seal of one aspect is a dust seal which seals an annular gap between a shaft and a housing, the dust seal including: a reinforcing ring that is fixed to an inner peripheral surface of a shaft bore provided in the housing; and a seal main body made of an elastic body integrally fixed to the reinforcing ring. The seal main body has an outer annular portion which is fixed to an inner peripheral surface of the reinforcing ring, and an inner annular portion having a lip portion which is slidably on an outer peripheral surface of the shaft. Further, an annular spring is installed on a sealed space side of the seal main body, the spring having an outer pressing portion which presses an inner peripheral surface of the outer annular portion radially outwardly, and an inner pressing portion which presses an outer peripheral surface of the inner annular portion radially inwardly.

According to the one aspect, the annular spring is installed in the seal main body which is an elastic body, hence even if the inner annular portion of the seal main body having the lip portion deteriorates (plastic deformation), the spring can cause the lip portion to express sealing performance. Further, the spring is installed on the sealed space side of the seal main body, therefore even if dusts exists on the opposite side of the sealed space side, dust can be prevented from adhering to the spring. Thereby the spring can function with stability.

The outer pressing portion of the spring may extend from the sealed space side to the opposite side thereof radially outwardly; and the inner pressing portion of the spring may extend from the sealed space side to the opposite side thereof radially inwardly.

The outer annular portion of the seal main body and the inner annular portion of the seal main body may be connected via a bellows portion.

Thereby the inner annular portion of the seal main body follows the shaft, even if the shaft is eccentric with respect to the housing, hence the sealing performance can be kept from decreasing.

The bellows portion may have a radially contracting portion which radially contracts from an edge on the opposite side of the sealed space side in the outer annular portion toward the sealed space side and a radially expanding portion which radially expands from an edge on the opposite side of the sealed space side in the inner annular portion toward the sealed space side.

The lip portion may have an inclined surface on the opposite side of the sealed space side which radially expands from a tip of a lip toward the opposite side of the sealed space side; and an inclined surface on the sealed space side which radially expands from the tip of the lip toward the sealed space side, and the slope of the inclined surface on the opposite side of the sealed space side is greater than that of the inclined surface on the sealed space side.

Thereby when the dust seal is used for an apparatus where the shaft and the housing perform reciprocating motions, dust having adhered to the surface of the shaft can be scraped off to the opposite side of the sealed space side.

The inner annular portion of the seal main body may have a metal ring fixed on the sealed space side with respect to the lip portion.

Thereby the shape of the inner annular portion can be kept with stability, thus the sealing performance can be further kept with stability.

Each of the above configurations may be combined and used where possible.

### [Advantageous Effects of Invention]

As described above, the dust seal according to the present invention can cause the spring to function with stability to improve the sealing performance.

### [Brief Description of Drawings]

Fig. 1 is a schematic cross-sectional view of a dust seal according to Example 1 of the present invention.
Fig. 2 is a schematic cross-sectional view depicting the dust seal in use according to Example 1 of the present invention.
Fig. 3 is a plan view depicting an intermediate product of a spring according to Example 1 of the present invention.
Fig. 4 is a plan view of the spring according to Example 1 of the present invention.
Fig. 5 is a schematic cross-sectional view of a dust seal according to Example 2 of the present invention.
Fig. 6 is a schematic cross-sectional view of a dust seal according to Example 3 of the present invention.

### [Description of Embodiment]

An embodiment of the present invention will be described in detail based on examples with reference to the drawings. The dimensions, materials, shapes and relative positions of the components described in each example are not intended to limit the scope of the invention unless otherwise specified.

### (Example 1)

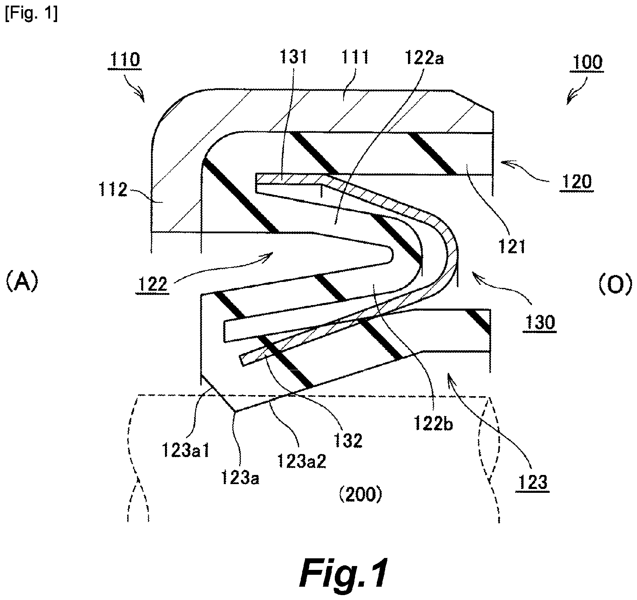

A dust seal according to Example 1 of the present invention will be described with reference to Figs. 1 to 4. The dust seal according to one or more embodiments of the present invention can be used for a hydraulic cylinder equipped in a construction machine, a shock absorber for an automobile, a dumper, a general industrial apparatus and the like. The following example is a dust seal used for a hydraulic cylinder.

### <Dust seal>

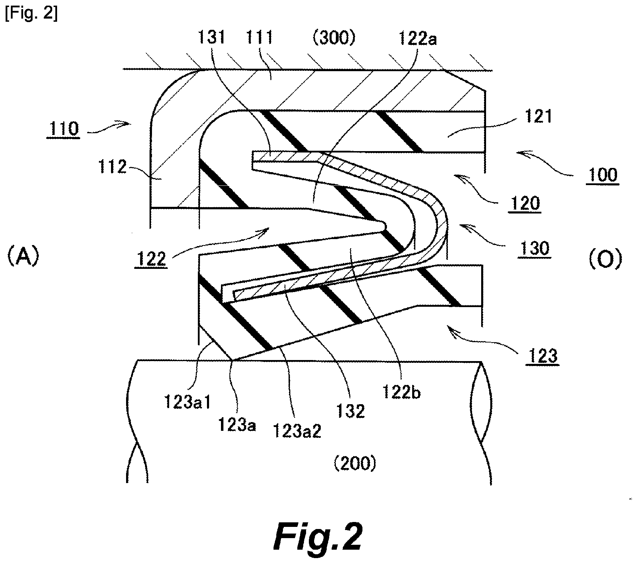

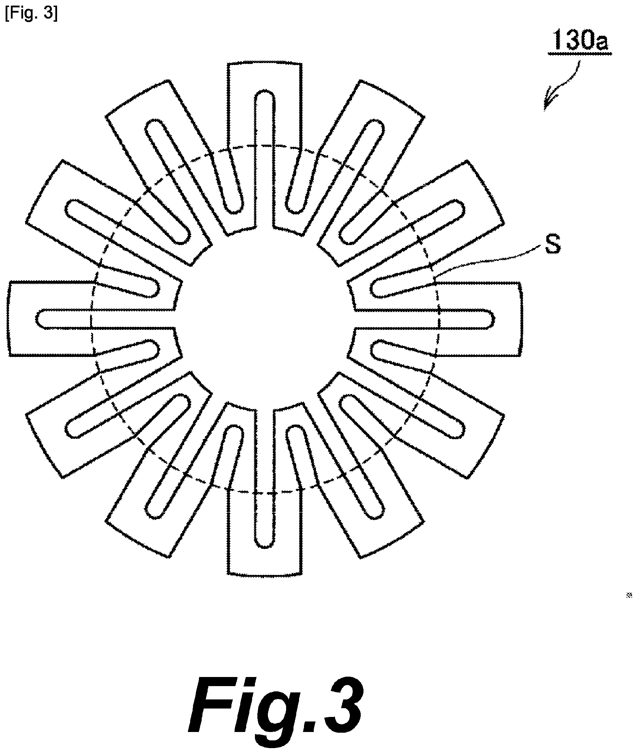

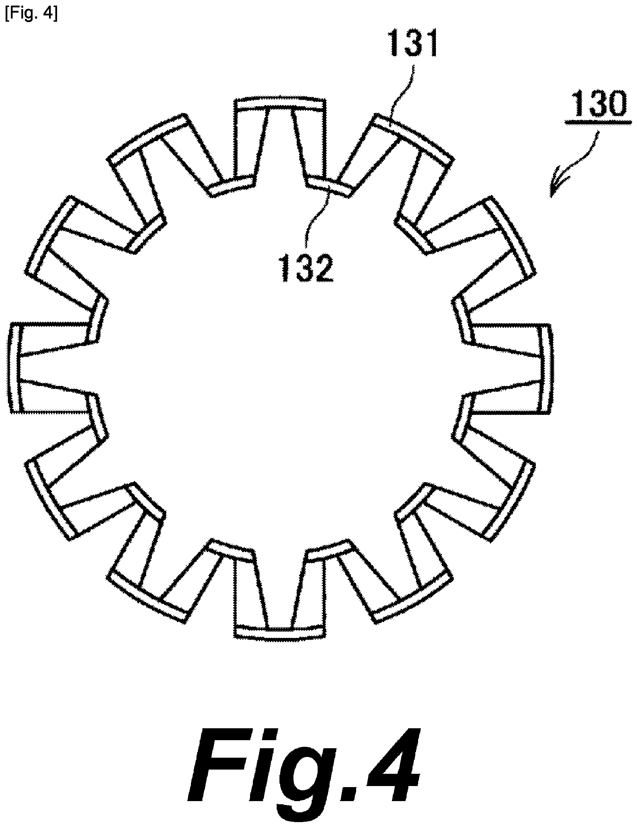

A general configuration of the dust seal according to Example 1 will be described with reference to Figs. 1 to 4. Fig. 1 is a schematic cross-sectional view of the dust seal according to Example 1 of the present invention. The dust seal according to Example 1 has a substantially rotationally symmetric shape. Fig. 1 shows a cross-sectional view of the dust seal when sectioned at a plane which includes a central axis line. Fig. 1 shows component members in a state where no external force is applied thereon, in order to clarify the dimensional relationship of each member. Therefore each member partially overlaps with another member. Fig. 2 is a schematic cross-sectional view depicting the dust seal in use according to Example 1 of the present invention. Fig. 2 is a cross-sectional view when the dust seal is sectioned at the plane which includes the central axis line. Fig. 3 is a plan view of an intermediate product of a spring according to Example 1 of the present invention. Fig. 4 is a plan view of the spring according to Example 1 of the present invention.

The hydraulic cylinder has a shaft (piston rod) 200 and a housing (cylinder) 300 which relatively perform reciprocating motions. A sealing system including a plurality of sealing members is provided to seal an annular gap between the shaft 200 and the housing 300. This sealing system prevents leakage of oil, as fluid to be sealed in a sealed space (O), into air (A), which is opposite to the sealed space (O), and also prevents entry of foreign substances from outside. The foreign substances are, for example, soil, ore, oil, water, ice and sap. A dust seal 100 is one of the plurality of sealing members constituting the sealing system and it is disposed closest to the air side (A). The dust seal 100 specifically plays a role of preventing the entry of foreign substances.

As mentioned above, the dust seal 100 according to Example 1 has a role of sealing the annular gap between the shaft 200 and the housing 300. The dust seal 100 includes a metal reinforcing ring 110 which is fixed to an inner peripheral surface of a shaft bore provided in the housing 300, and a seal main body 120 which is an elastic body integrally fixed to the reinforcing ring 110. The reinforcing ring 110 includes a cylindrical portion 111 of which outer peripheral surface makes close contact with the inner peripheral surface of the shaft bore of the housing 300, and an inward flange portion 112 which is disposed on the edge of the cylindrical portion 111 on the air side (A).

The seal main body 120 is made of such resin as rubber, urethane and PTFE. The seal main body 120 made of a material having high rigidity can scrape off foreign substances on the surface of the shaft. The seal main body 120 has an outer annular portion 121 which is fixed to an inner peripheral surface of the reinforcing ring 110, and an inner annular portion 123 which includes a lip portion 123a which is slidable on an outer peripheral surface of the shaft 200. The outer annular portion 121 and the inner annular portion 123 are connected via a bellows portion 122. The bellows portion 122 according to Example 1 includes a radially contracting portion 122a which radially contracts from an edge on the air side (A) of the outer annular portion 121 toward the sealed space side (O), and a radially expanding portion 122b which radially expands from an edge on the air side (A) of the inner annular portion 123 toward the sealed space side (O). The lip portion 123a has an inclined surface 123a1 on the air side (A) which radially expands from a tip of a lip portion 123a toward the air side (A); and an inclined surface 123a2 on the sealed space side (O) which radially expands from the tip of the lip portion 123a toward the sealed space side (O). The slope of the inclined surface 123a1 on the air side (A) is greater than that of the inclined surface 123a2 on the sealed space side (O).

The dust seal 100 according to Example 1 has a metal annular spring 130 installed in the seal main body 120 on the sealed space side (O). This spring 130 has an outer pressing portion 131 which presses an inner peripheral surface of the outer annular portion 121 of the seal main body 120 radially outwardly, and an inner pressing portion 132 which presses an outer peripheral surface of the inner annular portion 123 radially inwardly. The outer pressing portion 131 of the spring 130 extends from the sealed space side (O) to the air side (A) radially outwardly, and the inner pressing portion 132 of the spring 130 extends from the sealed space side (O) to the air side (A) radially inwardly. The shape and dimension of an outer peripheral surface around a tip of the outer pressing portion 131 is set to match with those of the inner peripheral surface of the outer annular portion 121, so that the spring 130 can be easily installed in the seal main body 120, and high stability of installation can be achieved. Specifically, the outer peripheral surface around the tip of the outer pressing portion 131 and the inner peripheral surface of the outer annular portion 121 are both cylindrical surfaces, and are designed such that the outer diameter and the inner diameter thereof are approximately the same. The inner diameter of the tip of the inner pressing portion 132 of the spring 130 is designed to be smaller than the outer diameter of the outer peripheral surface of the inner annular portion 123. Thereby the inner pressing portion 132 presses the lip portion 123a radially inwardly and the tip of the lip portion 123a can be kept close contact with the outer peripheral surface of the shaft 200.

A method of manufacturing the spring 130 will be described in brief with reference to Figs. 3 and 4. First an intermediate product 130a, which extends in a circumferential direction in meandering manner, is manufactured by cutting a metal plate (see Fig. 3). A radially inner portion and a radially outer portion of the intermediate product 130a are bent forward respectively with respect to the page surface at a bend line S located approximately at the center in a radial direction. Thereby the spring 130 can be obtained. Fig. 4 is a plan view of the spring 130 created by the bending processing.

### <Advantages of dust seal of Example 1>

The dust seal 100 of Example 1 has the annular spring 130 installed in the seal main body 120 made of an elastic body. Hence even if the inner annular portion 123 having the lip portion 123a deteriorates (plastic deformation), the spring 130 can cause the lip portion 123a to express sealing performance. Thus a long time sealing performance can be achieved. Further, the dust seal 100 of Example 1 has the spring 130 installed on the sealed space side (O) of the seal main body 120. Therefore even if dust exists on the air side (A), the dust can be prevented from adhering to the spring 130. Thereby accumulation of dust inside the spring 130 and diminishing of the elasticity of the spring 130 can be prevented. Further, generation of rust and electric corrosion in the metal spring 130 caused by salt and metal particles contained in the dust can also be prevented. Thus, the spring can function with stability.

The seal main body 120 of Example 1 has the outer annular portion 121 and the inner annular portion 123 connected via a bellows portion 122. The inner annular portion 123 follows the shaft 200, even if the shaft 200 is eccentric with respect to the housing 300, hence the sealing performance can be maintained.

The lip portion 123a of Example 1 has the inclined surface 123a1 on the air side (A) which radially expands from the tip of the lip portion 123a toward the air side (A); and the inclined surface 123a2 on the sealed space side (O) which radially expands from the tip of the lip portion 123a toward the sealed space side (O), and is designed such that the slope of the inclined surface 123a1 on the air side (A) is greater than that of the inclined surface 123a2 on the sealed space side (O). Thereby when the shaft 200 and the housing 300 perform reciprocating motions, the dust having adhered to the surface of the shaft can be scraped off to the air side (A).

### (Example 2)

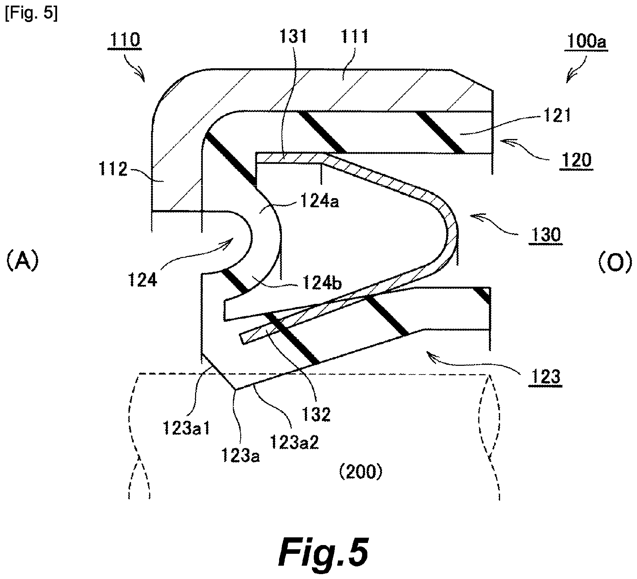

Example 2 of the present invention is illustrated in Fig. 5. Example 2 described below is different from Example 1 in the configuration of the bellows portion in the seal main body. The rest of the configuration and functions of Example 2 are the same as Example 1, hence the same component element as Example 1 is denoted with the same reference sign, and description thereof will be omitted.

Fig. 5 is a schematic cross-sectional view of a dust seal according to Example 2 of the present invention. The dust seal according to Example 2 has a substantially rotationally symmetric shape. Fig. 5 shows a cross-sectional view of the dust seal when sectioned at a plane which includes a central axis line. Fig. 5 shows component members in a state where no external force is applied thereon, in order to clarify the dimensional relationship of each member. Therefore each member partially overlaps with another member.

Similarly to Example 1, the dust seal 100a of Example 2 has a reinforcing ring 110, a seal main body 120 and a spring 130. The configuration of the reinforcing ring 110 and that of the spring 130 are the same as Example 1, hence description thereof is omitted.

The seal main body 120 of Example 2 is made of such resin as rubber, urethan and PTFE. The seal main body 120 has an outer annular portion 121 which is fixed to an inner peripheral surface of the reinforcing ring 110, and an inner annular portion 123 which includes a lip portion 123a which is slidable on an outer peripheral surface of the shaft 200. The configuration of the outer annular portion 121 and that of the inner annular portion 123 are the same as Example 1, hence description thereof is omitted.

The seal main body 120 of Example 2 has the outer annular portion 121 and the inner annular portion 123 connected via a bellows portion 124, similarly to Example 1. The bellows portion 124 of Example 2 includes a radially contracting portion 124a which radially contracts from an edge on the air side (A) of the outer annular portion 121 toward the sealed space side (O); and a radially expanding portion 124b which radially expands from an edge on the air side (A) of the inner annular portion 123 toward the sealed space side (O). Example 2 is different from the above mentioned Example 1 in that the length of the radially contracting portion 124a and the radially expanding portion 124b in an axial direction (a direction of the central axis line of the shaft 200) is shorter than that of Example 1.

The dust seal 100a of Example 2 which is configured in this way can achieve the same effects as Example 1. Further, the length of the radially contracting portion 124a and the radially expanding portion 124b of Example 2 in the axial direction is shorter than that of Example 1. Therefore accumulation of dust in an annular gap between the radially contracting portion 124a and the radially expanding portion 124b can be prevented. This allows the bellows portion 124 to be kept from a state where expansion and contraction in a radial direction thereof is blocked. Therefore the dust seal 100a of Example 2 may be used under an environment where clay-based dust scatters.

### (Example 3)

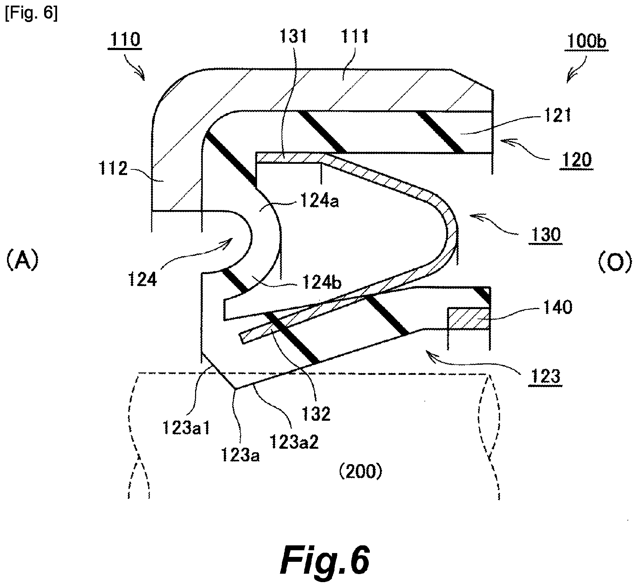

Example 3 of the present invention is illustrated in Fig. 6. Example 3 described below has a metal ring fixed to the inner annular portion of the seal main body of Example 2. The rest of the configuration and functions of Example 3 are the same as Example 2, hence the same component element as Example 2 is denoted with the same reference sign, and description thereof will be omitted.

Fig. 6 is a schematic cross-sectional view of a dust seal according to Example 3 of the present invention. The dust seal according to Example 3 has a substantially rotationally symmetric shape. Fig. 6 shows a cross-sectional view of the dust seal when sectioned at a plane which includes a central axis line. Fig. 6 shows component members in a state where no external force is applied thereon, in order to clarify the dimensional relationship of each member. Therefore each member partially overlaps with another member.

Similarly to Example 1 and Example 2, the dust seal 100b of Example 3 has a reinforcing ring 110, a seal main body 120 and a spring 130. The configuration of the reinforcing ring 110 and that of the spring 130 are the same as Example 1, hence description thereof is omitted.

The seal main body 120 of Example 3 is made of such resin as rubber, urethane and PTFE. The seal main body 120 has an outer annular portion 121 which is fixed to an inner peripheral surface of the reinforcing ring 110, and an inner annular portion 123 which includes a lip portion 123a which is slidable on an outer peripheral surface of the shaft 200. The configuration of the outer annular portion 121 is the same as Example 1, hence description thereof is omitted. The seal main body 120 of Example 3 has the outer annular portion 121 and the inner annular portion 123 connected via a bellows portion 124, similarly to Example 1. The configuration of the bellows portion 124 of Example 3 is the same as that of Example 2, therefore description thereof is omitted.

The inner annular portion 123 of the seal main body 120 of Example 3 has a metal ring 140 fixed on the sealed space side (O) with respect to the lip portion 123a. The configuration of the lip portion 123a is the same as that of Example 1.

The dust seal 100b of Example 3 which is configured in this way can achieve the same effects of Example 2. Further, the inner annular portion 123 of Example 3 has the metal ring 140 fixed on the sealed space side (O) with respect to the lip portion 123a, hence the shape of the inner annular portion 123 can be kept with stability, thus the sealing performance can be further kept with stability.

The metal ring 140 of Example 3 is disposed in the inner annular portion 123 on an inner peripheral surface side, but the metal ring 140 may be disposed in the inner annular portion 123 on an outer peripheral surface side, or may be disposed inside the inner annular portion 123. Further, the metal ring 140 of Example 3 is disposed in the dust seal 100a described in Example 2, but the metal ring 140 may be disposed in the dust seal 100 described in Example 1.

### (Other)

In the configuration of the bellows portion in each example described above, the crest portion is disposed only in one location. But a plurality of crests and troughs may be disposed in the bellows portion.

### [Reference Signs List]

- 100, 100a, 100b: Dust seal
- 110: Reinforcing ring
- 111: Cylindrical portion
- 112: Inward flange portion
- 120: Seal main body
- 121: Outer annular portion
- 122, 124: Bellows portion
- 122a, 124a: Radially contracting portion
- 122b, 124b: Radially expanding portion
- 123: Inner annular portion
- 123a: Lip portion
- 123a1: Inclined surface on the air side
- 123a2: Inclined surface on the sealed space side
- 130: Spring
- 130a: Intermediate product
- 131: Outer pressing portion
- 132: Inner pressing portion
- 140: Metal ring
- 200: Shaft
- 300: Housing

## Claims

1. A dust seal which seals an annular gap between a shaft and a housing, the dust seal comprising:
a reinforcing ring which is fixed to an inner peripheral surface of a shaft bore provided in the housing; and
a seal main body made of an elastic body integrally fixed to the reinforcing ring, wherein
the seal main body includes an outer annular portion which is fixed to an inner peripheral surface of the reinforcing ring, and an inner annular portion which has a lip portion which is slidable on an outer peripheral surface of the shaft, and
an annular spring is installed on a sealed space side of the seal main body, the spring having an outer pressing portion which presses an inner peripheral surface of the outer annular portion radially outwardly, and an inner pressing portion which presses an outer peripheral surface of the inner annular portion radially inwardly.

2. The dust seal according to claim 1, wherein the outer pressing portion of the spring extends from the sealed space side to the opposite side thereof radially outwardly; and the inner pressing portion of the spring extends from the sealed space side to the opposite side thereof radially inwardly.

3. The dust seal according to claim 1 or 2, wherein the outer annular portion of the seal main body and the inner annular portion of the seal main body are connected via a bellows portion.

4. The dust seal according to claim 3, wherein the bellows portion includes: a radially contracting portion which radially contracts from an edge on the opposite side of the sealed space side in the outer annular portion toward the sealed space side; and a radially expanding portion which radially expands from an edge on the opposite side of the sealed space side in the inner annular portion toward the sealed space side.

5. The dust seal according to any one of claims 1 to 4, wherein the lip portion includes: an inclined surface on the opposite side of the sealed space side which radially expands from a tip of a lip toward the opposite side of the sealed space side; and an inclined surface on the sealed space side which radially expands from the tip of the lip toward the sealed space side, and the slope of the inclined surface on the opposite side of the sealed space side is greater than that of the inclined surface on the sealed space side.

6. The dust seal according to any one of claims 1 to 5, wherein the inner annular portion of the seal main body has a metal ring fixed on the sealed space side with respect to the lip portion.
